# EUROPÄISCHE PATENTSCHRIFT

(11) **EP 1 819 106 B1**
(45) Veröffentlichungstag und Bekanntmachung des Hinweises auf die Patenterteilung: **16.09.2009**
(21) Anmeldenummer: 07002707.3
(22) Anmeldetag: 08.02.2007
(51) Int. Cl.: H04W 4/02, H04L 12/56, H04W 84/18

(54) **Verfahren zum Austausch von Informationen zwischen einer ortsfesten und einer mobilen Bluetooth-Station in Abhängigkeit der räumlichen Nähe der Stationen**
Method for data exchange between a fixed and a mobile Bluetooth station depending on the spatial proximity of said stations
Procédé destiné à l'échange d'informations entre une station fixe et une station mobile de type Bluetooth en fonction d'une proximité spatiale desdites stations

(30) Priorität: 13.02.2006 DE 102006006734
(43) Veröffentlichungstag der Anmeldung: 15.08.2007
(73) Patentinhaber: Blue Cell Networks GmbH, 96047 Bamberg (DE)
(72) Erfinder: Gaufer, Andreas, 96120 Bischberg (DE); Hofmann, Johannes, 96047 Bamberg (DE); Rother, Rainer, 96103 Hallstadt (DE)
(74) Vertreter: Stippl, Hubert

(56) Entgegenhaltungen:
- EP-A- 1 294 163
- WO-A-02/17285
- WO-A-02/078381
- US-A1- 2003 110 216
- US-A1- 2003 114 104

## Beschreibung

Die vorliegende Erfindung betrifft ein Verfahren zum Austausch von Informationen zwischen einem mobilen Endgerät eines Nutzers, nämlich einem Mobiltelefon, einem PDA, einem Taschencomputer oder einem portablen PC, Laptop, Notebook, aus einer Vielzahl derartiger Endgeräte und einer vorzugsweise ortsfesten Sende-/Empfangsstation, wobei der Austausch der Informationen von einer Handlung des Nutzers abhängt, die es der Sende-/Empfangsstation ermöglicht, Informationen von der Sende-/Empfangsstation auf das betreffende mobile Endgerät zu übertragen.

Ein entsprechendes Verfahren ist aus der DE 103 56 025 bekannt. Es handelt sich hierbei um ein Verfahren zum drahtlosen vollautomatischen Versenden von multimedialen Inhalten an im Empfangsbereich erreichbare Geräte unter Verwendung von Bluetooth-Technologie, wobei die Geräte im Empfangsbereich bezüglich ihres Herstellers und Gerätetyps identifiziert werden und anhand dieser Identifikation ausgewählte Inhalte an die Geräte im Empfangsbereich versendet werden. Ähnliche Verfahren zur Übertragung von Informationen an mobile Endgeräte im Empfangsbereich von Kurzstreckenfunksendern sind aus WO 02/078381 A1, US 2003/0114104 A1 sowie US 2003/0110216 A1 bekannt.

Zur Übertragung von Informationen existieren verschiedene Verfahren, welche es ermöglichen, Informationen (Text, Bild, Video, Musik, Programme) mittels einer lokal angebrachten Sendestation per Kurzstreckenfunk (z.B. Bluetooth) automatisch an mobile Endgeräte (Mobiltelefone, PDAs, Taschencomputer, Laptops) zu übertragen. Diese Verfahren werden üblicherweise an öffentlichen Plätzen, integriert in (Außen)Werbeflächen, an Einzelhandels- Verkaufsflächen oder auf Großveranstaltungen eingesetzt, um eine kostenlose, schnelle sowie orts- und/oder kontextbezogene Übertragung von Informationen auf mobile Endgeräte unter Umgehung der GSM-Netzbetreiben zu ermöglichen.

Alle bekannten Verfahren haben ein zentrales Problem. Vor der eigentlichen Übertragung von Inhalten muss die Erlaubnis der Nutzer zur Übertragung der Informationen sichergestellt werden, um nicht gegen Gesetze zum Zwecke des Verbraucherschutzes zu verstoßen. Hierfür sind momentan folgende Verfahren üblich:

### 1. Zweistufige Erlaubnisabfrage

Die "Sichtbarkeit" der Bluetooth-Schnittstelle wird als erste Erlaubnis des Nutzers gewertet ihn anzusprechen. Anschließend wird der Nutzer über einen Dialog auf dem Display seines mobilen Endgerätes gefragt, ob er eine Datei empfangen annehmen möchte. Hier kann der Nutzer durch Bestätigung seine Erlaubnis geben. Die Informationen werden nun übertragen und können anschließend vom Nutzer verwendet werden.

### 2. Pro-aktive Einwilligung durch Zusenden einer Datei an den Bluetooth Hotspot

Der Nutzer muss eine Datei (Visitenkarte, Bild, etc.) mit seinem mobilen Endgerät erstellen, welche optional einen definierten Text enthalten (z.B. "Ja, ich will") kann. Diese Visitenkarte muss dann vom Nutzer per Bluetooth an den Bluetooth-Hotspot gesendet werden. In Reaktion auf den Erhalt dieser Datei, startet der Bluetooth-Hotspot einen Dialog auf dem Display des mobilen Endgerätes. Hier kann der Nutzer seine Bestätigung geben. Die Übertragung von Informationen an das entsprechende mobile Endgerät beginnt anschließend.

Ggf. kann hier die Art der Informationen, welche vom Bluetooth-Hotspot zugestellt werden, mittels der im ersten Schritt zugestellten Datei, selektiert werden (Sende ein Bild, um das Spiel zu erhalten, sende eine Visitenkarte, um das Musikstück zu erhalten)

### 3. Pro-aktive Einwilligung durch Änderung des Bluetooth-Names des mobilen Endgerätes des Nutzers

Mobile Endgeräte verfügen in der Regel über eine Funktion, mit der der eigene "Bluetooth Name" geändert werden kann. Der Nutzer muss nun seinen Bluetooth Namen auf einen definierten Wert setzen (z.B. "Ja ich will") (erster Schritt) und muss die Bluetooth-Funktion seines Endgerätes auf sichtbar stellen (zweiter Schritt). Sind beide Bedingungen erfüllt, wird der Nutzer über einen Dialog auf dem Display seines mobilen Endgerätes gefragt, ob er Informationen annehmen möchte - hier kann der Nutzer seine Bestätigung geben. Die Informationen werden nun übertragen und können anschließend vom Nutzer verwendet werden. Gegebenenfalls kann hier die Art der Informationen, welche vom Bluetooth-Hotspot zugestellt werden, mittels des im ersten Schritt gewählten Bluetooth Namens, selektiert werden (Bluetooth Name= "Spiel" um das Spiel zu erhalten, Bluetooth Name = "Musik" um das Musikstück zu erhalten)

### 4. Hilfs-Programm

Nutzer, welche an den angebotenen Informationen interessiert sind, müssen sich zunächst ein Hilfsprogramm auf dem mobilen Endgerät installieren. Dieses Programm wird in der Regel vom Anbieter des Bluetooth-Hotspots zur Verfügung gestellt. Erst nach Installation (erster Schritt) und Start der Anwendung (zweiter Schritt) auf dem mobilen Endgerät kann ein interessierter Nutzer die verfügbaren Informationen abrufen und ggf. auf sein mobiles Endgerät übertragen.

All diesen vorerwähnten Verfahren haftet das Problem an, dass sie kompliziert und erklärungsbedürftig sind. Nutzer müssen auf umständliche Art und Weise über mehrere Schritte ihr Einverständnis erklären, was in der Regel zu vermindertem Abruf von Informationen führt. Zwar ist die zweistufige Erlaubnisabfrage nach dem obigen Abschnitt 1. etwas einfacher. Allerdings genügt diese Abfrage nicht eindeutig den Verbraucherschutzrichtlinien in bestimmten Ländern.

Die Aufgabe der vorliegenden Erfindung besteht darin, ein gattungsgemäßes Verfahren zu schaffen, welches eine Erlaubnisabfrage ermöglicht, die einfach und unkompliziert durchzuführen ist.

Die vorliegende Aufgabe wird bei dem gattungsgemäßen Verfahren durch die Merkmale des unabhängigen Anspruchs 1 gelöst. Die Idee des erfindungsgemäßen Verfahrens besteht darin, die Entscheidung des Nutzers eines mobilen Endgeräts zur Gestattung der Übertragung von Informationen einer Sende-/Empfangsstation davon abhängig zu machen, wie nahe sich das mobile Endgerät an einer solchen Sende-/Empfangsstation befindet. Überschreitet er den Abstand X, d.h. ist sein mobiles Endgerät näher, werden Informationen übertragen. Es wird hierdurch möglich das Einverständnis mit der "Zweistufige Erlaubnisabfrage" wie in 1. beschrieben einzuholen und gleichzeitig dem Verbraucherschutz zu genügen. Des Weiteren ist es hierdurch möglich Endgeräten , bei denen bauartbedingt kein Dialog zur Benutzerzustimmung vor einer Informationsübertragung implementiert ist, Informationen zu übertragen und gleichzeitig dem Verbraucherschutz zu genügen.

Zweckmäßigerweise wird der Abstand X aus den funktechnischen Größen der mobilen Endgeräte abgeleitet.

Besonders zweckmäßig erweist sich hierzu die Auswertung des Pegels der Funk-Feldstärke des mobilen Endgerätes. Die Höhe des Pegels kann somit als Auslösesignal für den Start der Informationsübertragung zwischen Sende-/Empfangsstation und mobilem Endgerät eingesetzt werden.

Gemäß der vorliegenden Erfindung erfolgt die Übertragung der Information per Kurzstreckenfunk, insbesondere per Bluetooth zwischen Sende-/Empfangsstation und mobilem Endgerät. Dies hat den Vorteil, dass die Informationsübertragung für den Nutzer kostenfrei ist, d.h. nicht über ein kostenpflichtiges öffentliches oder privates Netz zu erfolgen hat.

Bei Verwendung der Bluetooth-Technologie ist als Bluetooth-Spezifikation die Bluetooth-Spezifikation Version 1.2 (Inquiry Result Format with RSSI) besonders vorteilhaft, da diese es ermöglicht, den Abstand jedes mobilen Endgeräts aus dem Pegel der Funk-Feldstärke der Bluetooth-Kommunikationspakete des jeweiligen mobilen Endgerätes abzuleiten.

Zweckmäßigerweise wird die "Zustimmung" zur Übertragung von Informationen durch den Nutzer dadurch gegeben, dass dieser sich mit seinem mobilen Endgerät in eine Akzeptanzzone gibt, dergestalt, dass das mobile Endgerät innerhalb des Abstandes X sich befindet.

Gemäß einer weiteren Ausgestaltung des erfindungsgemäßen Verfahrens wird eine Information von der Sende-/Empfangsstation an das mobile Endgerät übertragen, wenn sich das mobile Endgerät in der Vergangenheit mindestens einmal innerhalb des Abstandes X, d.h. innerhalb des Zustimmungsbereichs, befunden hat. Hierbei wird über eine entsprechende Memory-Funktion der Sende-/Empfangsstation eine einmal erteilte Zustimmung erfasst und Informationsinhalte zu späteren Zeitpunkten an das betreffende mobile Endgerät übermittelt, auch wenn dieses sich später nicht innerhalb des Zustimmungsbereichs, d.h. Abstandes X befindet. Hierdurch können jeweils aktualisierte Informationen in zeitlich kontinuierlicher Sequenz übermittelt werden.

Erfindungsgemäß erfolgt die Übertragung der Informationen vollautomatisch, d.h. lediglich abhängig von dem Eintritt in den Zustimmungsbereich, d.h. dem Bereich innerhalb des Abstandes X. Eine vorhergehende Implementierung von persönlichen Erkennungsprofilen oder Registrierungen ist nicht vorgesehen. Von der Sende-/Empfangsstation an das jeweilige mobile Endgerät können Informationen unterschiedlichster Art in Dateiform übertragen werden, wie z.B. Textdateien, Tondateien, Videosequenzen etc.

Das erfindungsgemäße Verfahren ermöglicht es, das mobile Endgerät gleichsam als eine Art digitalen Warenkorb zu verwenden, mit dem an entsprechenden Sende-/Empfangsstationen lediglich durch Annäherung des mobilen Endgeräts an die betreffende Station Informationsinhalte abgegriffen werden können.

Eine zweckmäßige Ausgestaltung der vorliegenden Erfindung wird anhand von Zeichnungsfiguren näher erläutert. Es zeigen:
- Fig. 1:: eine Ausgestaltung des vorliegenden Verfahrens unter Verwendung einer Sende- und Empfangsstation mit umfänglicher Akzeptanzzone,
- Fig. 2:: eine weitere Ausgestaltung des erfindungsgemäßen Verfahrens unter Verwendung der Sende- und Empfangsstation in einer Verkaufstheke sowie
- Fig. 3:: eine Wiedergabe der Ausgestaltung des Verfahrens gemäß Fig. 1 einschließlich der Darstellung des Empfangsbereichs der Sende-/Empfangsstation.

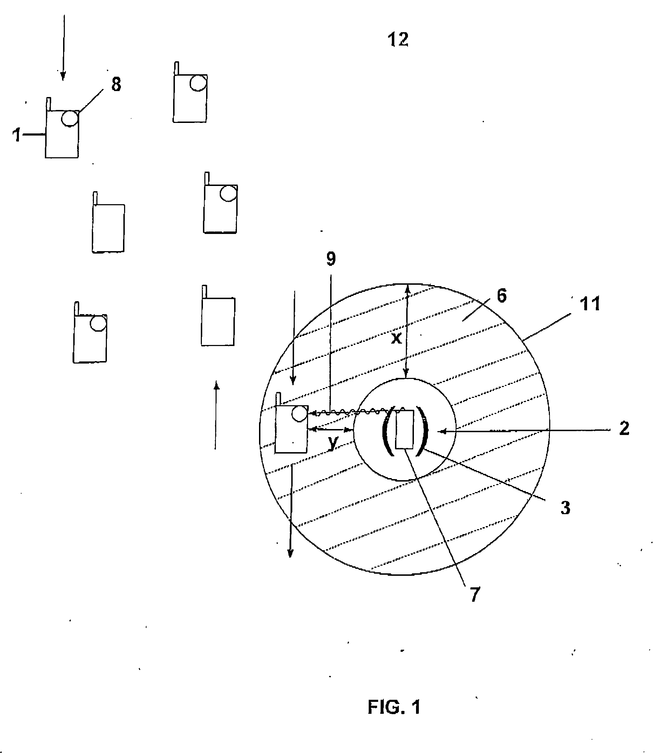

Bezugsziffer 12 in Fig. 1 kennzeichnet, in stark vereinfachter, schematischer Darstellungsweise, eine Einkaufspassage in einem Einkaufszentrum in Draufsicht. In einer solchen Einkaufspassage 12 bewegen sich eine Vielzahl von mobilen Endgeräten 1, welche teils mit einem Bluetooth-Sender/Empfänger, teils ohne ausgestattet sind. Die Nutzer sind der Übersichtlichkeit halber in Fig. 1 nicht dargestellt.

In der Einkaufspassage 12 befindet sich eine Sende-/Empfangsstation 2, die mit einem Bluetooth-Sender/Empfänger 7 ausgestattet ist. Darüber hinaus besitzt die Sende-/Empfangsstation 2 einen Pegelsensor 3, welcher in der Lage ist, die Funkpegelstärke der Kommunikationspakete des jeweiligen mobilen Endgeräts 1 zu empfangen und in einer nicht dargestellten Auswerteeinheit auszuwerten, dahingehend ob sie einen fest vorgegebenen Grenzwert überschreiten. Der Grenzwert des Pegels entspricht einem Abstand X, der eine sogenannte Akzeptanzzone 6 definiert.

Befindet sich das mobile Endgerät 1 innerhalb der Akzeptanzzone 6, wird dies von der Sende-/Empfangseinheit 2 festgestellt und Informationen, z.B. in Form einer Datei 9, an das mobile Endgerät 1 übermittelt. Das Eindringen des mobilen Endgeräts 1 in die Akzeptanzzone 6 löst somit die Übertragung der Datei aus. Da es sich um Bluetooth-Technologie handelt, ist die Übertragung kostenfrei.

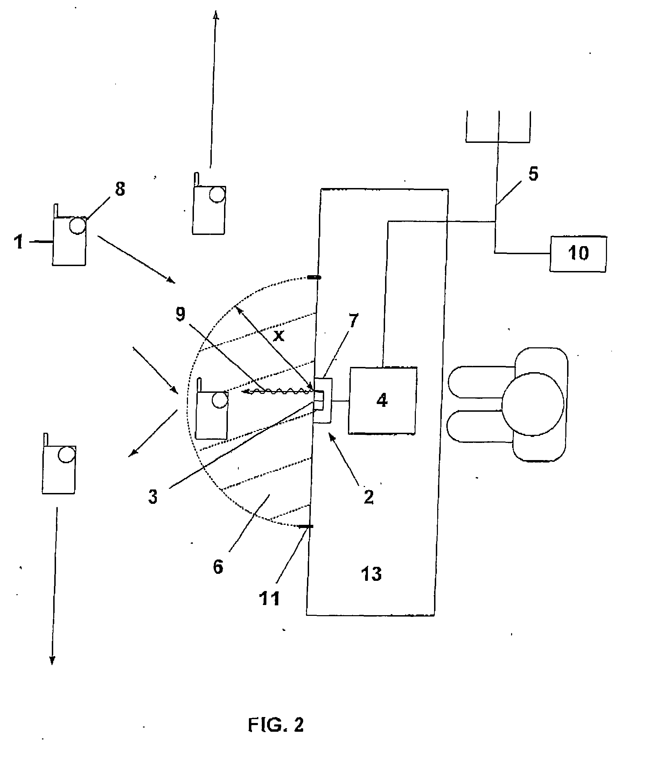

Gemäß Fig. 2 befindet sich an einer Verkaufstheke 13 eine Sende-/Empfangsstation 2 mit einer entsprechenden Markierung 11 an der Verkaufstheke 13. Beispielsweise zahlt der Nutzer zunächst an den Verkäufer einen Betrag A, worauf dieser ihm die Erlaubnis einräumt, sein mobiles Endgerät 1 in der Akzeptanzzone 6 der Sende-/Empfangsstation 2 zu bringen. Daraufhin wird die gekaufte Ware (z.B. Datei 9) per Bluetooth-Übertragung von der Sende-/Empfangsstation auf das mobile Endgerät 1 übertragen.

Bei der in Fig. 2 dargestellten Ausführungsform steht die Datenverarbeitungseinheit 4 über ein Netzwerk 5 mit (nicht dargestellten) anderen Sende- und Empfangsstationen in Verbindung. Darüber hinaus kann eine zentrale Informations- und Datenverarbeitungseinheit 10 vorgesehen sein.

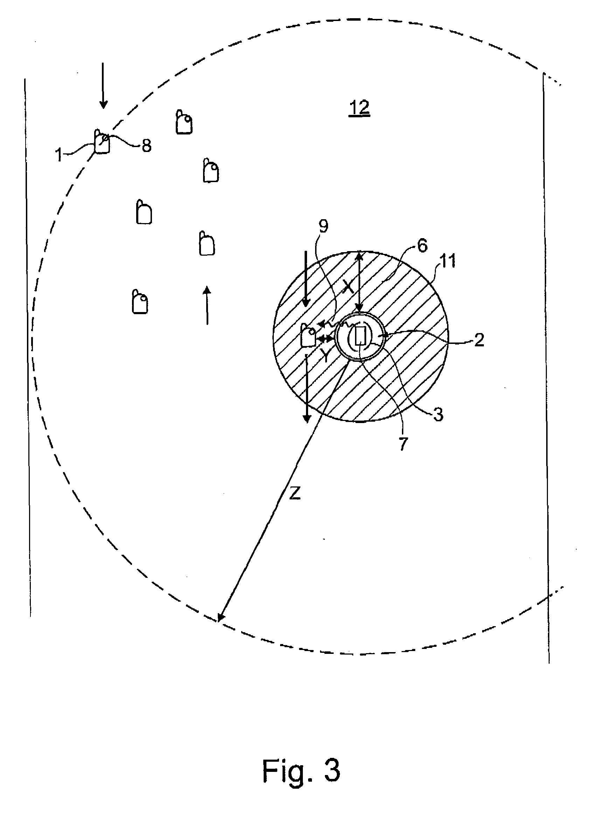

In Fig. 3 ist unter Heranziehung der Darstellung nach Fig. 1 der Empfangsbereich der Sende-/Empfangsstation 2 wiedergegeben. Er wird durch einen Radius Z festgelegt. Die Akzeptanzzone 6 befindet sich innerhalb dieses Empfangsbereichs, d.h. ist reichweitenunabhängig.

Hat sich ein mobiles Endgerät 1 mindestens einmal innerhalb der Akzeptanzzone 6 in der Vergangenheit gefunden, kann über eine entsprechende Memory-Funktion der Sende-/Empfangsstation erteilte Zustimmung erfasst und Informationsinhalte zu späteren Zeitpunkten an das betreffende mobile Endgerät 1 übermittelt werden, auch wenn letzteres sich später nicht innerhalb der Akzeptanzzone 6, d.h. des Abstandes X sondern lediglich innerhalb des Abstandes Z befindet.

Beispielsweise können hierdurch jeweils aktualisierte Informationen in zeitlich kontinuierlicher Sequenz übermittelt werden.

Damit der Nutzer erkennt, dass sein mobiles Endgerät 1 in die Akzeptanzzone gelangt, ist die Akzeptanzzone 6 zweckmäßigerweise mit einer Markierung 11 versehen.

Die Markierung kann auf verschiedenartigste Weise erfolgen, beispielsweise durch eine linienförmige Markierung, eine flächige Markierung, eine farbige Markierung, Markierung durch Leuchteinrichtungen. Ebenso kann der Bereich der Akzeptanzzone 6 durch akustische Einrichtungen markiert werden, beispielsweise durch einen Piepston, Summton oder dergleichen, der beispielsweise von der Sende- und Empfangsstation aus generiert wird.

Ebenso kann eine Markierung auch dadurch erfolgen, dass auf dem mobilen Endgerät ein Signal, beispielsweise ein Ton, ein Leuchtsignal und/oder ein Vibrationssignal sich einstellt.

Die vorliegende Erfindung hat vielfältigste Einsatzmöglichkeiten.

Ein elektronisches Gut (Handyspiel, Klingelton etc.) soll verkauft werden. Der Kunde zahlt den Kaufpreis bar an das Kassen-Personal. Der Verkäufer erteilt dem Nutzer dann die Erlaubnis sein Handy an die, auf dem Ladentisch befindliche Akzeptanzzone 6 zu halten. Die Sende-/Empfangsstation 2 erkennt den geringen Abstand des Endgeräts und liefert die gekaufte Datei aus. (ggf. kann hier noch eine Möglichkeit der Auswahl der Ware durch das Kasse-Personal geschaffen werden.)

Ein Plakat, z.B. in einem Kino, bewirbt einen in kürze startenden Spielfilm. Auf dem Plakat ist zu lesen das ein Videotrailer fürs Handy per Bluetooth kostenlos heruntergeladen werden kann, wenn der Besucher sein Endgerät mit eingeschaltetem und auf sichtbar eingestelltem Bluetooth an eine markierte Stelle der Akzeptanzzone 6 des Plakats hält. Hinter dieser Stelle des Plakats befinden sich die Sende-/Empfangsstation 2. Eine Annäherung auf 10-20 cm (Radius der Akzeptanzzone) des Besucher-Handys wird registriert und dadurch die Übertragung der Videodatei ausgelöst.

Eine Zeitschrift bewirbt in einer U-Bahn Station die Verfügbarkeit der Handy-Ausgabe ihrer Inhalte an einem Zeitungskiosk. Der Besucher wird gebeten, sein Handy nahe an eine markierte Stelle der Sende-/Empfangsstation zu halten. Ausgelöst durch die Annäherung bietet die Sende-/Empfangsstation 2 die Inhalte der aktuellen Ausgabe an. Der Nutzer nimmt an. Am folgenden Tag wird der gleiche Benutzer auch ohne Annäherung angesprochen und bekommt erneut die aktuellen Nachrichten angeboten. Er kann diese dann bequem empfangen, ohne sich erneut in die direkte Nähe des Kiosks begeben zu müssen.

Ein Ladengeschäft oder Gastronom bietet seinen Kunden einen Ermäßigungscoupon an. Wegen des werblichen Charakters kann der Coupon nur innerhalb des Geschäfts in der Akzeptanzzone 6 empfangen werden. So werden Passanten, die nicht an der Aktion teilnehmen wollen, nicht belästigt. Hat der Benutzer einmal sein Interesse bekundet, werden ihm bei einem späteren Besuch auch bei weiterer Entfernung Gutscheine angeboten.

Die vorliegende Erfindung ermöglicht es, mobile Endgeräte einerseits nach Art von elektronischen Einkaufskörben zu verwenden, wobei gleichzeitig die Anforderungen zur Einwilligung der Übermittlung von Informationen von der Sende-/Empfangsstation an den Nutzer auf ein Minimum, nämlich Einhaltung des erforderlichen Mindestabstands X reduziert werden. Daraus resultiert eine einfache und unkomplizierte Art und Weise der Informationsübermittlung, welche noch dazu den Verbraucherschutzrichtlinien entspricht.

### BEZUGSZEICHENLISTE

- 1: mobiles Endgerät
- 2: Sende- und Empfangsstation
- 3: Pegelsensor
- 4: Datenverarbeitungseinheit
- 5: Netzwerk
- 6: Akzeptanzzone
- 7: Blootooth Sender/Empfänger
- 8: Blootooth Sender/Empfänger
- 9: Datei
- 10: Zentrale Informations- und Datenverarbeitungseinheit
- 11: Markierung
- 12: Einkaufspassage
- 13: Verkaufstheke

## Patentansprüche

1. Verfahren zum Austausch von Informationen zwischen einem mobilen Endgerät (1) eines Nutzers, nämlich einem Mobiltelefon, einem PDA, einem Taschencomputer oder einem portablen PC, Laptop, Notebook, aus einer Vielzahl derartiger Endgeräte und einer vorzugsweise ortsfesten Sende-/Empfangsstation (2), wobei der Austausch der Informationen von einer Handlung des Nutzers abhängt, die es der Sende-/Empfangsstation (2) ermöglicht, Informationen von der Sende-/Empfangsstation (2) auf das betreffende mobile Endgerät (1) zu übertragen,
**dadurch gekennzeichnet, dass**
(a) eine innerhalb der Übertragungsreichweite der Sende-/Empfangsstation (2) befindliche Akzeptanzzone (6) in einem reichweitenunabhängigen Abstand X zur Sende-/Empfangsstation (2) festgelegt wird,
(b) die Übertragung der Informationen von der Sende-/Empfangsstation (2) zum mobilen Endgerät (1) in Abhängigkeit des Verhältnisses des Abstandes X zu dem Abstand Y des mobilen Endgeräts (1) zur Sende-/Empfangsstation (2) erfolgt,
(c) eine Markierung (11) vorgesehen ist, mittels der das Verbringen des mobilen Endgerätes (1) in die Akzeptanzzone (6) für den Nutzer identifizierbar ist,
(d) mittels eines Pegelsensors (3) von der Sende-/Empfangsstation (2) die Funkpegelstärke des mobilen Endgeräts (1) innerhalb der Übertragungsreichweite der Sende-/Empfangsstation (2) ermittelt wird,
(e) ein Pegelgrenzwert vorgegeben ist, der dem Abstand X entspricht und
(f) mittels einer Auswerteeinheit von der Sende-/Empfangsstation (2) festgestellt wird, ob der tatsächlich gemessene Wert der Funkpegelstärke den Pegelgrenzwert überschreitet oder nicht.

2. Verfahren nach Anspruch 1,
**dadurch gekennzeichnet, dass**
der Abstand X aus funktechnischen Größen der mobilen Endgeräte (1) abgeleitet wird.

3. Verfahren nach Anspruch 2,
**dadurch gekennzeichnet, dass**
es sich bei den funktechnischen Größen um den Pegel der Funk-Feldstärke des mobilen Endgerätes (1) handelt, welche an der Sende-/Empfangsstation (2) erfasst wird.

4. Verfahren nach Anspruch 2 oder 3,
**dadurch gekennzeichnet, dass**
die Übertragung der Information zwischen mobilem Endgerät (1) und Sende-/Empfangseinheit (2) per Kurzstreckenfunk, insbesondere per Bluetooth, erfolgt.

5. Verfahren nach Anspruch 4,
**dadurch gekennzeichnet, dass**
als Bluetooth-Spezifikation die Bluetooth-Spezifikation Version 1,2 (Inquiry Result Format with RSSI) vorgesehen ist.

6. Verfahren nach einem der vorhergehenden Ansprüche,
**dadurch gekennzeichnet, dass**
eine Information von der Sende-/Empfangsstation (2) an das mobile Endgerät (1) übertragen wird, wenn sich das mobile Endgerät (1) innerhalb des Abstandes X befindet.

7. Verfahren nach Anspruch 6,
**dadurch gekennzeichnet, dass**
eine Information von der Sende-/Empfangsstation (2) an das mobile Endgerät (1) übertragen wird, wenn sich das mobile Endgerät (1) in der Vergangenheit mindestens einmal innerhalb des Abstandes X befunden hat.

8. Verfahren nach einem der vorhergehenden Ansprüche,
**dadurch gekennzeichnet, dass**
die Akzeptanzzone (6) sich an der Sende-/Empfangsstation (2) befindet.

9. Verfahren nach.einem der vorhergehenden Ansprüche,
**dadurch gekennzeichnet, dass**
die Übertragung der Information automatisch erfolgt.

10. Verfahren nach einem der vorhergehenden Ansprüche,
**dadurch gekennzeichnet, dass**
die Übertragung der Information ohne Erstellung eines persönlichen Erkennungsprofils erfolgt.

11. Verfahren nach einem der vorhergehenden Ansprüche,
**dadurch gekennzeichnet, dass**
die Übertragung der Information ohne Registrierung erfolgt.

## Claims

1. A method for exchanging informations between a mobile end device (1) of a user, namely a mobile phone, DPA, a pocket computer or a portable PC, laptop, notebook, out of a plurality of such end devices, and a preferably stationary transceiver station (2), whereby the exchange of said informations depends on a user action enabling said transceiver station (2) to transfer information therefrom to the respective mobile end device (1),
**characterized in that**
(a) an acceptance zone (6) located within the transfer range of said transceiver station (2) being defined in a range-independent distance X to said transceiver station (2),
(b) the information being transferred from said transceiver station (2) to said mobile end device (1) depending on the ratio of said distance X to the distance Y between said mobile end device (1) and said transceiver station (2),
(c) an indication (11) being provided, by which placement of said mobile end device (1) into said acceptance zone (6) can be indentified by said user,
(d) the radio transmission level strength of said mobile end device (1) within the transfer range of said transceiver station (2) being detected by a level sensor (3) at said transceiver station (2),
(e) a threshold value corresponding to said distance X being predetermined and
(f) it is determined, by an evaluation unit in said transceiver station (2), whether or not the actually measured value of the radio transmission level strength exceeds said threshold value.

2. The method according to claim 1,
**characterized in that**
the distance X is derived from radiotechnical magnitudes of said mobile end devices (1).

3. The method according to claim 2,
**characterized in that**
as said radiotechnical magnitudes the level of the radio field strength of said mobile end device (1) is meant as detected at said transceiver station (2).

4. The method according to claim 2 or 3,
**characterized in that**
the transmission of information between the mobile end device (1) and the transceiver unit (2) is realized by short distance radio, in particular by Bluetooth.

5. The method according to claim 4,
**characterized in that**
the Bluetooth specification version 1.2 (enquiry result format with RSSI) is provided as blue tooth specification.

6. The method according to one of the preceding claims,
**characterized in that**
an information is being transferred from said transceiver station (2) to said mobile end device (1) when the latter is placed within said distance X.

7. The method according to claim 6,
**characterized in that**
an information from said transceiver station (2) is transferred to said mobile end device (1), when the latter had been placed in the past at least one time within said distance X.

8. The method according to one of the preceding claims,
**characterized in that**
said acceptance zone (6) is located at said transceiver station (2).

9. The method according to one of the preceding claims,
**characterized in that**
said information is automatically transferred.

10. The method according to one of the preceding claims,
**characterized in that**
transferral of the information takes place without generation of a personnel recognition profile.

11. The method according to one of the preceding claims,
**characterized in that**
transferral of the information takes place without registration.

## Revendications

1. Procédé destiné à l'échange d'informations entre un terminal mobile (1) d'un utilisateur, précisément un téléphone mobile, un PDA, un ordinateur de poche ou un PC portable, un laptop, un notebook, depuis une pluralité de tels terminaux, et une station émettrice/réceptrice (2) de préférence fixe, l'échange des informations dépendant d'une action de l'utilisateur, action permettant à la station émettrice/réceptrice (2) de transmettre des informations, de la station émettrice/réceptrice (2) au terminal mobile (1) concerné,
**caractérisé en ce que**
(a) une zone d'acceptation (6), se trouvant dans les limites de la portée de transmission de la station émettrice/réceptrice (2), est fixée, à une distance X, indépendante de la portée, de la station émettrice/réceptrice (2),
(b) la transmission des informations, de la station émettrice/réceptrice (2) au terminal mobile (1), s'effectue en fonction du rapport entre la distance X et la distance Y du terminal mobile (1) à la station émettrice/réceptrice (2),
(c) il est prévu un marquage (11), au moyen duquel le séjour du terminal mobile (1) dans la zone d'acceptation (6) est identifiable pour l'utilisateur,
(d) l'intensité de niveau d'émission radio du terminal mobile (1) est déterminée au moyen d'un détecteur de niveau (3), dans les limites de la portée de transmission de la station émettrice/réceptrice (2), par la station émettrice/réceptrice (2),
(e) il est prédéterminé une valeur limite de niveau, correspondant à la distance X, et
(f) à l'aide d'une unité d'évaluation, il est constaté, par la station émettrice/réceptrice (2), si la valeur, effectivement mesurée, de l'intensité de niveau d'émission radio dépasse ou non la valeur limite de niveau.

2. Procédé selon la revendication 1,
**caractérisé en ce que**
la distance X est dérivée de grandeurs fonctionnelles des terminaux mobiles (1).

3. Procédé selon la revendication 2,
**caractérisé en ce que**,
concernant les grandeurs fonctionnelles, il s'agit du niveau de l'intensité de champ d'émission radio du terminal mobile (1), appréhendé à la station émettrice/réceptrice (2) .

4. Procédé selon la revendication 2 ou 3,
**caractérisé en ce que**
la transmission de l'information, entre le terminal mobile (1) et la station émettrice/réceptrice (2), s'effectue par émission à courte portée, en particulier par Bluetooth.

5. Procédé selon la revendication 4,
**caractérisé en ce qu'**
est prévue comme spécification Bluetooth la spécification Bluetooth Version 1.2 (Inquiry Result Format with RSSI).

6. Procédé selon l'une des revendications précédentes,
**caractérisé en ce qu'**
une information est transmise de la station émettrice/réceptrice (2) au terminal mobile (1), lorsque le terminal mobile (1) se trouve dans les limites de la distance X.

7. Procédé selon la revendication 6,
**caractérisé en ce qu'**
une information est transmise de la station émettrice/réceptrice (2) au terminal mobile (1), lorsque le terminal mobile (1) se trouve, dans le passé, au moins une fois dans les limites de la distance X.

8. Procédé selon l'une des revendications précédentes,
**caractérisé en ce que**
la zone d'acceptation (6) se trouve à la station émettrice/réceptrice (2).

9. Procédé selon l'une des revendications précédentes,
**caractérisé en ce que**
la transmission de l'information s'effectue automatiquement.

10. Procédé selon l'une des revendications précédentes,
**caractérisé en ce que**
la transmission de l'information s'effectue sans établissement d'un profil d'identification personnel.

11. Procédé selon l'une des revendications précédentes,
**caractérisé en ce que**
la transmission de l'information s'effectue sans enregistrement.
